**Europäisches Patentamt**

**European Patent Office**

**Office européen des brevets**

(19)

(11) Veröffentlichungsnummer : **0 135 798 B1**

(12) **EUROPÄISCHE PATENTSCHRIFT**

(45) Veröffentlichungstag der Patentschrift :
15.03.89

(21) Anmeldenummer : 84109975.7

(22) Anmeldetag : 22.08.84

(51) Int. Cl.⁴ : **B 29 C 45/22**

(54) **Mehrstoffdüse zum Zusammenführen von mindestens zwei fliessfähigen Reaktionskomponenten für die Herstellung eines fliessfähigen, zu Kunststoff, insbesondere zu Schaumstoff ausreagierenden Reaktionsgemisches.**

(30) Priorität : 03.09.83 DE 3331840
01.10.83 DE 3335786
01.10.83 DE 3335787
01.06.84 DE 3420517

(43) Veröffentlichungstag der Anmeldung :
03.04.85 Patentblatt 85/14

(45) Bekanntmachung des Hinweises auf die Patenterteilung : 15.03.89 Patentblatt 89/11

(84) Benannte Vertragsstaaten :
AT BE CH DE FR GB IT LI NL

(56) Entgegenhaltungen :
EP—A— 0 037 523
EP—A— 0 040 371
EP—A— 0 090 257
DE—A— 2 252 008
DE—A— 2 444 308
DE—B— 1 251 190
FR—A— 1 496 800
FR—A— 2 096 522
FR—A— 2 264 652
US—A— 3 207 486
US—A— 3 947 177
US—A— 3 972 664
US—A— 3 985 486

(73) Patentinhaber : **MASCHINENFABRIK HENNECKE GMBH**
**Postfach 1180**
**D-5205 St. Augustin 1 (DE)**

(72) Erfinder : **Proksa, Ferdinand, Dr.**
**Am Arenzberg 9**
**D-5090 Leverkusen 3 (DE)**
Erfinder : **Sulzbach, Hans-Michael, Dipl.-Ing.**
**Hermann-Löns-Strasse 12**
**D-5330 Königswinter 51 (DE)**
Erfinder : **Raffel, Reiner, Dipl.-Ing.**
**Müschbungert 2**
**D-5200 Siegburg (DE)**
Erfinder : **Althausen, Ferdinand**
**Niederwennerscheid 48**
**D-5206 Neunkirchen 1 (DE)**

(74) Vertreter : **Müller, Heinz-Gerd, Dipl.-Ing. et al**
**BAYER AG Konzernverwaltung RP Patentabteilung**
**D-5090 Leverkusen 1, Bayerwerk (DE)**

## Beschreibung

Die Erfindung betrifft eine Mehrstoffdüse zum Zusammenführen von mindestens zwei fließfähigen Reaktionskomponenten für die Herstellung eines fließfähigen, zu Kunststoff, insbesondere zu Schaumstoff ausreagierenden Reaktionsgemisches, bestehend aus einem Düsengehäuse ; einer darin angeordneten Führungsbohrung, welche ihrerseits durch eine sich zu einem axialen Auslaßkanal hin konisch verjüngende Dichtfläche begrenzt ist und andererseits durch einen Verschlußdeckel mit darin befindlichem Einsatzkörper verschlossen ist ; einer in einer axialen Bohrung des Einsatzkörpers geführten Düsennadel, welche einerseits mit einem in Schließstellung den Auslaßkanal ausfüllenden Zapfen versehen ist und andererseits zwangssteuerbar ist ; einer in dem Bereich zwischen Einsatzkörper und Dichtfläche verschiebbar geführten Nadelhülse ; einer im Inneren der Nadelhülse vorgesehenen, von der Düsennadel durchzogenen Kammer, wobei diese Kammer mit einer Komponentenzuleitung verbunden ist, und wobei die Nadelhülse zum Auslaßkanal hin einen Boden besitzt, welcher eine mit dem Auslaßkanal fluchtende Öffnung aufweist, wobei die äußere Fläche des Bodens als Dichtfläche ausgebildet ist und im Schließzustand mit der Dichtfläche der Gehäusebohrung einen Dichtsitz bildet.

Die ältere deutsche Patentanmeldung P 33 31 840.9 richtet sich auf eine Mehrstoffdüse zum Zusammenführen mindestens zweier fließfähiger, Kunststoff, insbesondere Schaumstoff bildender Reaktionskomponenten zum Zwecke des Einleitens der Reaktion durch Vermischen, bestehend aus einem Gehäuse ; in das Gehäuse führenden Komponentenzuleitungen ; einer im Gehäuse angeordneten Gehäusebohrung mit koaxialem Auslaßkanal in ihrer Stirnfläche ; mindestens einer in der Gehäusebohrung koaxial geführten Nadelhülse ; einer in der Nadelhülse koaxial geführten Düsennadel ; einer zwischen der Wandung der Gehäusebohrung und der Nadelhülse sowie einer zwischen Nadelhülse und Düsennadel angeordneten Kammer, in welche je eine der Komponentenzuleitungen einmündet, wobei während des Schließzustandes die Düsennadel mit der inneren Stirnfläche der Nadelhülse und die äußere Stirnfläche der Nadelhülse mit der inneren Stirnfläche der Gehäusebohrung Dichtsitze bilden, wohingegen während des Öffnungszustandes die Düsennadel eine koaxiale Düsenöffnung der Nadelhülse freigibt, und zwischen der äußeren Stirnfläche der Nadelhülse und der inneren Stirnfläche der Gehäusebohrung eine Düsenöffnung gebildet ist, und die Düsennadel mit einem koaxialen Zapfen versehen ist, dessen Querschnittsform und -größe derjenigen der Düsenöffnung der Nadelhülse und derjenigen des Auslaßkanals angepaßt ist und welcher im Schließzustand den Auslaßkanal bis zum Auslaß ausfüllt ; und wobei sowohl der Düsennadel als auch der Nadelhülse an ihrem anderen Ende eine Zwangssteuerung zugeordnet ist.

Bei dieser Mehrstoffdüse erfolgt die Zuführung einer Komponente durch die zentrale Öffnung, und die Zuführung weiterer Komponenten erfolgt durch konzentrische Ringspalte.

Die für die Dichtsitze vorgesehenen Dichtflächen müssen außerordentlich genau gearbeitet sein, damit im Schließzustand keine Leckage auftritt, denn rings um den geschlossenen Ringdüsenspalt steht jeweils die Komponente unter Druck an. Beim geringsten Verziehen der Nadelhülsen verwerfen sich die Dichtflächen und verursachen Undichtigkeit der Dichtsitze. Nachteilig ist bei dieser Ausführungsform auch, daß für jede zusätzliche, über zwei Reaktionskomponenten hinausgehende Komponente eine weitere Nadelhülse vorgesehen werden muß.

Es besteht deshalb die Aufgabe, die eingangs beschriebene Mehrstoffdüse dahingehend zu verbessern, daß die durch das Verziehen der Dichtflächen bedingte Leckagegefahr herabgesetzt wird und daß im Falle der gesonderten Zuführung von mehr als zwei Komponenten nur eine Nadelhülse bzw. eine reduzierte Anzahl von Nadelhülsen erforderlich ist.

Diese Aufgabe wird dadurch gelöst, daß die Mündung der weiteren Zuleitung im Bereich der Dichtflächen der Gehäusebohrung angeordnet ist und in Schließstellung von der Dichtfläche der Nadelhülse verschlossen ist.

Dadurch wird erreicht, daß die Leckagegefahr zumindest stark herabgesetzt wird, weil in Schließstellung der Komponentendruck nicht mehr rings um den Dichtsitz ansteht, sondern nur noch im Bereich der Mündung. Da derartige Mündungen relativ klein sind, müssen schon starke Verwerfungen der Dichtflächen vorhanden sein, damit Leckage auftreten kann.

Aus DE-A1-2 444 308 ist es zwar bekannt, von zwei Flüssigkeiten zur Vermischung eine Flüssigkeit auf eine Prallfläche aufzustrahlen und zu einem Film aufzuteilen und die zweite Flüssigkeit senkrecht oder mit einer geringfügigen Gegenstrompomonente bezüglich der Fließrichtung des Flüssigkeitsfilmes einzustrahlen und darin zu verteilen. Über die Zuführung weiterer Flüssigkeiten sagt dieses Dokument nichts aus.

Es ist schon eine Mischvorrichtung vorgeschlagen worden (europäische Patentanmeldung Veröffentlichungsnummer 0 090 257), bei welcher die Komponentenzuleitungen ebenfalls in einen zwischen Gehäuse und Einsatzkörper (Hohlkolben) gebildeten Spalt münden, wobei der Einsatzkörper zentrisch von einem Ausstoßkolben durchzogen ist. Der Einsatzkörper selbst rotiert, so daß der besagte Spalt die Funktion eines Scherspaltes besitzt und die Mischkammer darstellt. Durch die hier bereits im Spalt erfolgende Vermischung der Reaktionskomponenten ergeben sich Reinigungsprobleme.

Demgegenüber erfolgt die Vermischung bei der neuen Mehrstoffdüse erst außerhalb des Spaltes, weil nur eine Reaktionskomponente in den Spalt eingeführt wird. Die Zuführung von weiteren, mit der erstgenannten Komponente und untereinander nicht reaktiven Komponenten in den Spalt bereitet keine Schwierigkeiten.

Nach einer besonderen Ausführungsform sind der Zuleitung mehrere Mündungen zugeordnet. Sie sind vorzugsweise gleichmäßig um die Mittelachse der Mehrstoffdüse herum verteilt.

Nach einer ersten Ausführungsform ist (sind) die Mündung(en) radial ausgerichtet.

Auf diese Weise wird die radial zugeführte Komponente — je nach der ihr innewohnenden Energie — in die zentral strömende Komponente hineingedüst oder ummantelt diese.

Nach einer anderen Ausführungsform ist (sind) die Mündung(en) tangential ausgerichtet. Auf diese Weise wird der Strom der zentralen Komponente ummantelt, wobei an der Grenzschicht zwischen den beiden Komponentenströmen in vorteilhafter Weise eine Relativbewegung entsteht.

Schließlich ist es auch möglich, daß die Mündung(en) eine Zwischenstellung zwischen radialer und tangentialer Ausrichtung einnimmt (einnehmen).

Je nach dem, ob der radiale oder tangentiale Anteil der Ausrichtung überwiegt, treten die dadurch hervorgerufenen Effekte stärker oder schwächer auf.

Schließlich lassen sich noch weitere Strömungseffekte dadurch erzielen, daß die Mündung nicht senkrecht auf die Mittelachse gerichtet ist, sondern zu ihr geneigt ist.

Dieser verschiedenen Ausführungsformen kann sich der Fachmann bedienen, indem er entsprechend den jeweiligen physikalischen Eigenschaften der Komponenten die geeignete Ausrichtung der Mündungen der Zuleitungen durch Versuche feststellt und anschließend für die Praxis benutzt.

Gemäß einer besonderen Ausführungsform ist eine Zuleitung für eine Zusatzkomponente vorgesehen, deren Mündung in die Führungsbohrung der Düsennadel weist, und bei der die Düsennadel mit einem Absatz versehen ist, welcher als Steuerkante dient, indem in Öffnungsstellung der Düsennadel die Mündung von dem Absatz freigegeben ist und in Schließstellung vom dickeren Schaftabschnitt abgedichtet ist.

Dadurch eröffnet sich die Möglichkeit, mindestens eine Zusatzkomponente der zentral zugeführten Hauptkomponente beizugeben. Dies kann unter gewissen Umständen vorteilhaft sein.

Dabei bieten sich alternative Ausführungsformen der Mehrstoffdüse an :

Nach einer ersten Ausführungsform ist die Führungsbohrung für die Düsennadel im Einsatzkörper angeordnet. Alternativ hierzu ist sie in der Nadelhülse angeordnet.

Bei beiden Ausführungsformen wird der Zufluß der Zusatzkomponente durch den Absatz der Düsennadel freigegeben oder unterbrochen. Es versteht sich, daß Zuleitungen für mehrere Zusatzkomponenten in der gleichen Weise angeordnet sein können. Ihre Mündungen werden dann vorzugsweise in gleichen Winkelabständen voneinander angeordnet. Auch ist es möglich, einer Zuleitung mehrere Mündungen zuzuordnen.

Man wird von den Hauptkomponenten jene über die in einer Nadelhülse befindliche Kammer führen, welche sich mit der Zusatzkomponente verträgt, weil nach jedem Arbeitstakt in dieser Kammer ein Gemisch aus der Hauptkomponente und der Zusatzkomponente verbleibt.

Eine weitere besondere Ausführungsform ist gekennzeichnet durch die Kombination der Mehrstoffdüse mit einem Formwerkzeug mittels Anfahrführungen und korrespondierender Koppelelemente.

Diese Ausführungsform hat den Vorteil, eine ansonsten stationär angeordnete Mehrstoffdüse an beispielsweise auf einem Drehtisch taktweise vorbeiwandernde Formwerkzeuge anfahren zu können. Dabei lassen sich vorteilhaft an sich bekannte Steuervorrichtungen vorsehen, welche den Mischvorgang erst auslösen, wenn das Formwerkzeug geschlossen und die Mehrstoffdüse abdichtend angefahren ist. Als Anfahrführungen dienen beispielsweise Schlittenführungen. Der Anfahrvorgang selbst läßt sich beispielsweise mittels eines zugeordneten hydraulischen Antriebes durchführen.

Vorzugsweise ist bei dieser Ausführungsform in der Wandung des Formwerkzeuges eine dem Formhohlraum vorgeordnete Beruhigungskammer vorgesehen, deren Einlaßöffnung in Koppelstellung der Mehrstoffdüse mit deren Auslaßöffnung übereinstimmt und mittels eines in der Beruhigungskammer geführten Verschlußschiebers verschließbar ist.

Auf diese Weise läßt sich die Auslaßöffnung der Mehrstoffdüse beim Ankoppeln an das Formwerkzeug abdichten. Der Verschlußschieber läßt sich als Auf/Zu-Schieber ausbilden. Er kann aber auch unter dem sich aufbauenden Druck des Gemisches gegen eine Vorspannung öffnen und läßt sich auch als Auswerfer für den in der Beruhigungskammer ausreagierten Gemischrest ausbilden. Dieser Verschlußschieber ist beispielsweise so ausgestaltet, daß ihm die Beruhigungskammer als Führung dient. Sein Hub ist vorzugsweise durch einen verstellbaren Anschlag einjustierbar. Die Achse des Verschlußschiebers fluchtet vorzugsweise mit der Achse der Mehrstoffdüse, kann aber auch jede andere Richtung aufweisen. Insbesondere können beide Achsen auch unter einem rechten Winkel zueinander angeordnet sein. Der Verschlußschieber läßt sich bequem hydraulisch oder mechanisch betätigen. Es versteht sich, daß er vorzugsweise automatisch steuerbar ist.

In einer Zeichnung ist die neue Mehrstoffdüse in einem Ausführungsbeispiel für vier Komponenten und in Kombination mit einem Formwerkzeug rein schematisch im Schnitt dargestellt und nachstehend näher erläutert. Es zeigen :

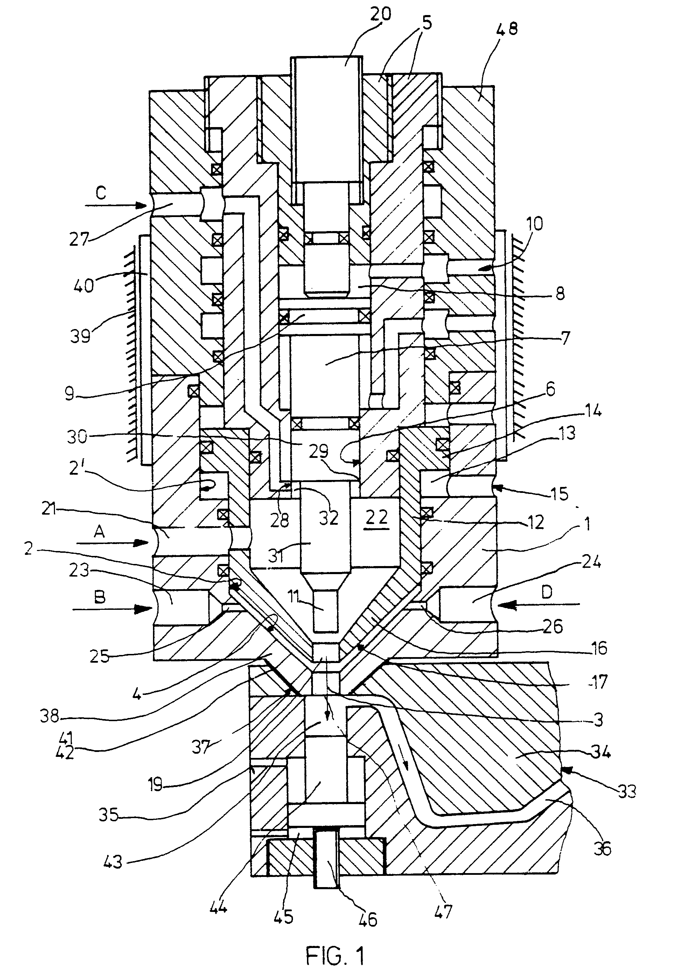

Fig. 1 die Mehrstoffdüse in Öffnungsstellung und

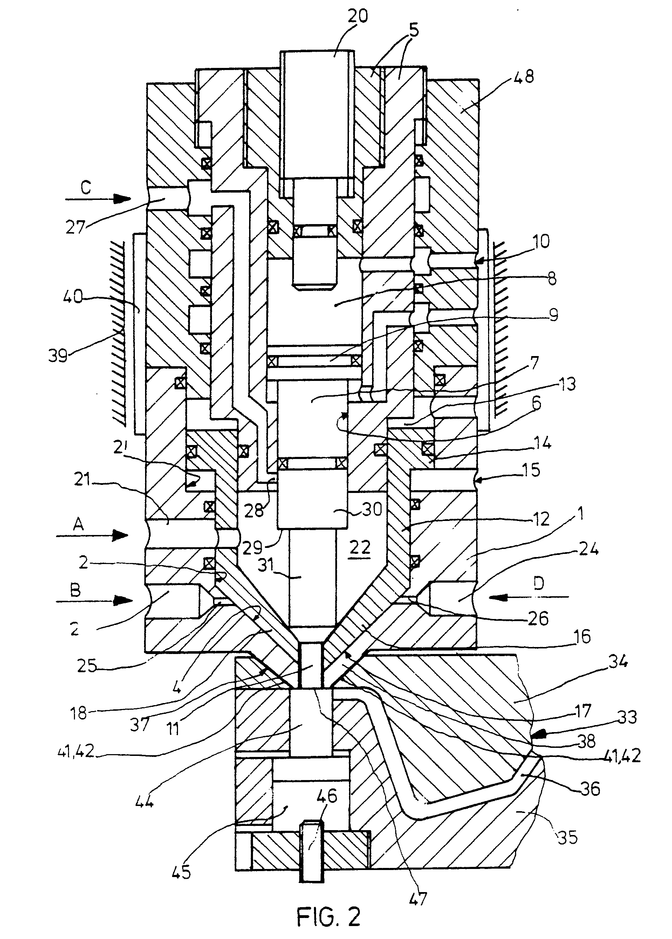

Fig. 2 die Mehrstoffdüse in Schließstellung.

In einem Düsengehäuse 1 ist eine Führungsbohrung 2 bzw. 2' angeordnet. Jene ist einerseits durch eine sich zu einem axialen Auslaßkanal 3 hin verjüngende Dichtfläche 4 begrenzt und andererseits durch einen Verschlußdeckel 48 mit darin befindlichem Einsatzkörper 5 verschlossen. In dem Einsatzkörper 5 ist eine Führungsbohrung 6 für eine Düsennadel 7 angeordnet. Sie weist am hinteren Ende einen wechselseitig beaufschlagbaren, in einem Zylinderraum 8 geführten Kolben 9 auf, welche beide Teil einer Zwangssteuerung 10 für die Düsennadel 7 sind. Am vorderen Ende ist die Düsennadel 7 mit einem Zapfen 11 versehen, welcher in Schließstellung den Auslaßkanal 3 völlig ausfüllt und somit auch als Reinigungswerkzeug zum Ausschieben des im Auslaßkanal 3 verbliebenen Gemischrestes dient. Zwischen der Dichtfläche 4 und dem Einsatzkörper 5 ist eine verschiebbare Nadelhülse 12 vorgesehen. Ihr hinteres Ende ist ebenfalls ein wechselseitig beaufschlagbarer, in einem Hydraulikzylinder 13 geführter Kolben 14, welche beide Teil einer Zwangssteuerung 15 sind. Das vordere Ende der Nadelhülse 12 besitzt einen Boden 16, dessen äußere Fläche als Dichtfläche 17 ausgebildet ist, und stellt in Schließstellung zusammen mit der Dichtfläche 4 den Dichtsitz 18 dar. Der Boden 16 besitzt eine axiale, dem Auslaßkanal 3 angepaßte Öffnung 19. Der Hub der Nadelhülse 12 — und damit die Spaltweite zwischen den Dichtflächen 4 und 17 — ist mittels des axial verschiebbaren Einsatzkörpers 5 einstellbar. Zum Einstellen des Hubes der Düsennadel 7 ist eine im Einsatzkörper 5 gelagerte Stellschraube 20 vorgesehen. Innerhalb der Nadelhülse 12 befindet sich eine mit einer Zuleitung 21 für die Komponente A verbundene Kammer 22, aus welcher die Komponente A in der Öffnungsstellung der Düsennadel 7 durch die Öffnung 19 austritt. Die Zuleitungen 23 und 24 für die Komponenten B und D besitzen je eine Mündung 25 und 26, welche die Dichtfläche 4 durchdringen. Sie liegen einander diametral gegenüber. Eine Zuleitung 27 für die Komponente C führt durch den Verschlußdeckel 48 und den Einsatzkörper 5 zu dessen der Kammer 22 zugewandtem Ende. Ihre Mündung 28 weist jedoch in die Führungsbohrung 6 für die Düsennadel 7. Die Düsennadel 7 besitzt einen Absatz 29, welcher derart angeordnet ist, daß die Kante des dickeren Schaftabschnittes 30 als Steuerkante wirkt und in Öffnungsstellung die Mündung 28 der Zuleitung 27 freigibt und die Komponente C durch den zwischen der Führungsbohrung 6 und dem dünneren Schaftabschnitt 31 verbleibenden Ringspalt 32 in die Kammer 22 strömt und sich zunächst mit der Komponente A vereinigt. Die Zusatzkomponente C gelangt sodann zusammen mit der Komponente A in die Öffnung 19 und weiter in den Auslaßkanal 3, wo auch noch die Komponenten B und D hinzukommen. Schließt die Düsennadel 7, so überfährt der Absatz 29 die Mündung 28 und der dickere Schaftabschnitt 30 verschließt sie.

Die Mehrstoffdüse ist mit einem Formwerkzeug 33 kombiniert. Dieses besteht aus zwei Formhälften 34, 35 und schließt den Formhohlraum 36 ein. Die der Mehrstoffdüse zugewandte Formhälfte 34 weist eine Zentrierausnehmung 37 auf, welche mit einem Zentrieransatz 38 der Mehrstoffdüse zusammenpaßt. Das Formwerkzeug 33 ist fixiert, während die Mehrstoffdüse in rein schematisch angedeuteten Anfahrführungen 39, 40 zu dem Formwerkzeug 33 hin bewegbar ist. Zentrieransatz 38 und Zentrierausnehmung 37 weisen im Schließzustand abdichtende Paßflächen 41, 42 auf. In der anderen Formhälfte 35 ist axial zur Zentrierausnehmung 37 eine Beruhigungskammer 43 vorgesehen. Sie dient gleichzeitig als Führung für einen Verschlußschieber 44, welchem ein hydraulischer Antrieb 45 sowie ein verstellbarer Anschlag 46 zugeordnet sind. Diese Ausführungsform des Verschlußschiebers 44 hat also lediglich Auf/Zu-Funktion, ist aber darüber hinaus auch als Auswerfer für den in der Beruhigungskammer 43 aushärtenden Gemischrest verwendbar. Die Beruhigungskammer 43 ist in der nicht dargestellten Stellung der Mehrstoffdüse bis frühestens nach dem Anfahren an das Formwerkzeug 33 von dem Verschlußschieber 44 völlig ausgefüllt und dichtet in angefahrener Stellung den Auslaßkanal 3 der Mehrstoffdüse ab, bis der Verdüsungsvorgang einsetzt. In der Öffnungsstellung der Mehrstoffdüse grenzen der Auslaßkanal 3 und die Einlaßöffnung 47 der Beruhigungskammer 43 unmittelbar aneinander. Sie liegen in der gleichen Achse.

## Patentansprüche

1. Mehrstoffdüse zum Zusammenführen von mindestens zwei fließfähigen Reaktionskomponenten für die Herstellung eines fließfähigen, zu Kunststoff, insbesondere zu Schaumstoff ausreagierenden Reaktionsgemisches, bestehend aus einem Düsengehäuse (1) ; einer darin angeordneten Führungsbohrung (2 bzw. 2'), welche ihrerseits durch eine sich zu einem axialen Auslaßkanal (3) hin konisch verjüngende Dichtfläche (4) begrenzt ist und andererseits durch einen Verschlußdeckel (48) mit darin befindlichem Einsatzkörper (5) verschlossen ist ; einer in einer axialen Bohrung (6) des Einsatzkörpers (5) geführten Düsennadel (7), welche einerseits mit einem in Schließstellung den Auslaßkanal (3) ausfüllenden Zapfen (11) versehen ist und andererseits zwangssteuerbar (10) ist ; einer in dem Bereich zwischen Einsatzkörper (5) und Dichtfläche (4) verschiebbar geführten Nadelhülse (12) ; einer im Inneren der Nadelhülse (12) vorgesehenen, von der Düsennadel (7) durchzogenen Kammer (22), wobei diese Kammer (22) mit einer Komponentenzuleitung (21) verbunden ist, und wobei die Nadelhülse (12) zum Auslaßkanal (3) hin einen Boden (16) besitzt, welcher eine mit dem Auslaßkanal (3) fluchtende Öffnung (19) aufweist, wobei die äußere Fläche des Bodens (16) als Dichtfläche (17) ausgebildet ist und im Schließzustand mit der Dichtfläche (4) der Gehäusebohrung (1) einen Dichtsitz (18) bildet, wobei mindestens eine weitere Zuleitung (23, 24) für mindestens eine weitere fließfähige Komponente zwischen Gehäuse (1) und der Nadelhülse (12) mündet, dadurch gekennzeichnet, daß die Mündung (25, 26) dieser weiteren Zuleitung (23, 24) um Bereich der Dichtflächen (4) der Gehäusebohrung (2) angeordnet ist und in Schließstellung von der Dichtfläche (17) der Nadelhülse (12) verschlossen ist.

2. Mehrstoffdüse nach Anspruch 1, dadurch gekennzeichnet, daß der Zuleitung (23, 24, 27) mehrere Mündungen (25, 26, 28) zugeordnet sind.

3. Mehrstoffdüse nach Anspruch 1 oder 2, dadurch gekennzeichnet, daß die Mündungen (25, 26, 28) um die Mittelachse gleichmäßig verteilt sind.

4. Mehrstoffdüse nach einem der Ansprüche 1 bis 3, dadurch gekennzeichnet, daß die Mündung-(en) (25, 26, 28) radial ausgerichtet ist (sind).

5. Mehrstoffdüse nach einem der Ansprüche 1 bis 3, dadurch gekennzeichnet, daß die Mündung-(en) (25, 26, 28) tangential ausgerichtet ist (sind).

6. Mehrstoffdüse nach einem der Ansprüche 1 bis 3, dadurch gekennzeichnet, daß die Mündung-(en) (25, 26, 28) eine Zwischenstellung zwischen radialer und tangentialer Ausrichtung einnimmt (einnehmen).

7. Mehrstoffdüse nach einem der Ansprüche 1 bis 6, gekennzeichnet durch eine Zuleitung (27) für eine Zusatzkomponente, deren Mündung (28) in die Führungsbohrung (6) der Düsennadel (7) weist, und die Düsennadel (7) mit einem Absatz (29) versehen ist, welcher als Steuerkante dient, indem in Öffnungsstellung der Düsennadel (7) die Mündung (28) von dem Absatz (29) freigegeben ist und in Schließstellung von dem dickeren Schaftabschnitt (30) abgedichtet ist.

8. Mehrstoffdüse nach einem der Ansprüche 1 bis 7, dadurch gekennzeichnet, daß die Führungsbohrung (6) für die Düsennadel (7) im Einsatzkörper (5) angeordnet ist.

9. Mehrstoffdüse nach einem der Ansprüche 1 bis 8, dadurch gekennzeichnet, daß die Führungsbohrung (6) für die Düsennadel (7) in der Nadelhülse (12) angeordnet ist.

10. Mehrstoffdüse nach einem der Ansprüche 1 bis 9, gekennzeichnet durch die Kombination mit einem Formwerkzeug (33) mittels Anfahrführungen (39, 40) und korrespondierender Koppelelemente (37, 38, 41, 43).

11. Mehrstoffdüse nach Anspruch 10, dadurch gekennzeichnet, daß in der Wandung des Formwerkzeuges (33) eine dem Formhohlraum (34) vorgeordnete Beruhigungskammer (43) vorgesehen ist, deren Einlaßöffnung (47) in Koppelstellung der Mehrstoffdüse mit deren Auslaßkanal (3) übereinstimmt und mittels eines in der Beruhigungskammer (43) geführten Verschlußschiebers (44) verschließbar ist.

## Claims

1. Multi-component nozzle for the coalescence of at least two free-flowing reaction components for the preparation of a free-flowing reaction mixture which reacts to give plastic, in particular foamed plastic, comprising a nozzle housing (1), a guide bore (2 and 2') arranged therein, which for its part is bounded by a sealing surface (4) tapering conically towards an axial outlet channel (3) and is closed on the other hand by a closure cover (48) with insert (5) inside it ; a nozzle needle (7), which is guided in an axial bore (6) of the insert (5), on the one hand is provided with a plug (11), filling the outlet channel (3) in closed position, and on the other hand is positively controllable (10) ; a needle sleeve (12), guided displaceably in the region between insert (5) and sealing surface (4) ; a chamber (22), provided inside the needle sleeve (12) and having the nozzle needle (7) passing through it, this chamber (22) being connected to a component supply line (21) and the needle sleeve (12) having, towards the outlet channel (3) a base (16), which has an opening (15) in alignment with the outlet channel (3), the outer surface of the base (16) being designed as a sealing surface (17) and, in the closed state, forming a seal seat (16) with the sealing surface (4) of the housing bore (1), there being at least one further supply line (23, 24) for at least one further free-flowing component, opening out between housing (1) and the needle sleeve (12), characterized in that the mouth (25, 26) of this further supply line (23, 24) is arranged in the region of the sealing surfaces (4) of the housing bore (2) and, in closed position, is closed by the sealing surface (17) of the needle sleeve (12).

2. Multi-component nozzle according to Claim 1, characterized in that the supply line (23, 24, 27) is assigned a plurality of mouths (25, 26, 28).

3. Multi-component nozzle according to Claim 1 or 2, characterized in that the mouths (25, 26, 28) are distributed evenly around the centre axis.

4. Multi-component nozzle according to one of Claims 1 to 3, characterized in that the mouth(s) (25, 26, 28) is (are) aligned radially.

5. Multi-component nozzle according to one of Claims 1 to 3 characterized in that the mouth(s) (25, 26, 28) is (are) aligned tangentially.

6. Multi-component nozzle according to one of Claims 1 to 3, characterized in that the mouth(s) (25, 26, 28) assume(s) an intermediate position between radial and tangential alignment.

7. Multi-component nozzle according to one of Claims 1 to 6, characterized by a supply line (27) for an additional component, the mouth (28) of which points into the guide bore (6) of the nozzle needle (7), and the nozzle needle (7) is provided with an extension (29), which serves as control edge by the mouth (28) being released by the extension (29) in open position of the nozzle needle (7) and sealed off by the thicker shank section (30) in closed position.

8. Multi-component nozzle according to one of Claims 1 to 7 characterized in that the guide bore (6) for the nozzle needle (7) is arranged in the insert (5).

9. Multi-component nozzle according to claims one of Claims 1 to 8 characterized in that the guide bore (6) for the nozzle needle (7) is arranged in the needle sleeve (12).

10. Multi-component nozzle according to one of Claims 1 to 9, characterized by the combination with a mould (33) by means of approach guides (39, 40) and corresponding coupling elements (37, 38, 41, 43).

11. Multi-component nozzle according to Claim 10, characterized in that a stabilization chamber (43) is provided in the wall of the mould (33) upstream of the mould cavity (34), the inlet opening (47) of which stabilization chamber coincides with the outlet channel (3) of the multi-component nozzle when it is in its coupled position and can be closed by means of a closure slide (44), guided in the stabilization chamber (43).

## Revendications

1. Buse à plusieurs matières pour mettre en contact au moins deux composants réactifs fluides pour produire un mélange réactionnel fluide formant par réaction une matière plastique, en particulier une mousse, constituée d'un corps de buse (1) ; d'un alésage de guidage (2, 2') pratiqué dans celui-ci, qui est limité d'un côté par une surface d'étanchéité (4) se rétrécissant en cône pour former un canal de sortie axial (3) et qui est fermé de l'autre côté par un couvercle de fermeture (48) contenant un insert (5) ; d'un pointeau (7) guidé dans un alésage axial (6) de l'insert (5) lequel pointeau comporte, d'un côté une broche (11) remplissant le canal de sortie (3) en position de fermeture et, de l'autre côté, une commande forcée (10) ; d'une douille de pointeau (12) guidée en pouvant coulisser dans la zone entre l'insert (5) et la surface d'étanchéité (4) ; d'une chambre (22) prévue à l'intérieur de la douille de pointeau (12) et traversée par le pointeau (7), cette chambre (22) étant reliée à une conduite d'adduction de composant (21), tandis que la douille de pointeau (12) possède du côté du canal de sortie (3) un fond (16) lequel présente un orifice (19) affleurant le canal de sortie (3), la surface extérieure du fond (16) se présentant comme une surface d'étanchéité (17) et formant un siège d'étanchéité (18) avec la surface d'étanchéité (4) de l'alésage de corps (1) en position de fermeture, tandis qu'au moins une conduite d'adduction supplémentaire (23, 24) pour au moins un autre composant fluide débouche entre le corps (1) et la douille de pointeau (12), caractérisée en ce que l'orifice (25, 26) de cette conduite d'adduction supplémentaire (23, 24) est disposé dans la zone de la surface d'étanchéité (4) de l'alésage (2) du corps de buse et est fermé en position de fermeture par la surface d'étanchéité (17) de la douille de pointeau (12).

2. Buse à plusieurs matières selon la revendication 1, caractérisée en ce que la conduite d'adduction (23, 24, 27) comporte plusieurs orifices (25, 26, 28).

3. Buse à plusieurs matières selon la revendication 1 ou 2, caractérisée en ce que les orifices (25, 26, 28) sont répartis uniformément autour de l'axe central.

4. Buse à plusieurs matières selon l'une des revendications 1 à 3, caractérisée en ce que le ou les orifice(s) (25, 26, 28) est (sont) disposé(s) radialement.

5. Buse à plusieurs matières selon l'une des revendications 1 à 3, caractérisée en ce que le (les) orifice(s) (25, 26, 28) est (sont) disposé(s) tangentiellement.

6. Buse à plusieurs matières selon l'une des revendications 1 à 3, caractérisée en ce que le ou les orifice(s) (25, 26, 28) prend (prennent) une position intermédiaire entre l'orientation radiale et l'orientation tangentielle.

7. Buse à plusieurs matières selon l'une des revendications 1 à 6, caractérisée par une conduite d'adduction (27) pour un composant supplémentaire dont l'orifice (28) débouche dans l'alésage de guidage (6) du pointeau (7) et que le pointeau (7) est pourvu d'un gradin (29) qui sert de bord de commande tandis que, en position d'ouverture du pointeau (7), l'orifice (28) est dégagé par le gradin (29) et que, en position de fermeture, il est fermé hermétiquement par la section de tige plus épaisse (30).

8. Buse à plusieurs matières selon l'une des revendications 1 à 7, caractérisée en ce que l'alésage de guidage (6) pour le pointeau (7) est disposé dans l'insert (5).

9. Buse à plusieurs matières selon l'une des revendications 1 à 8, caractérisée en ce que l'alésage de guidage (6) pour le pointeau (7) est disposé dans la douille de pointeau (12).

10. Buse à plusieurs matières selon l'une des revendications 1 à 9, caractérisée par la combinaison avec un outil de moulage (33) au moyen de guides d'accostage (39, 40) et d'éléments de couplage correspondants (37, 38, 41, 43).

11. Buse à plusieurs matières selon la revendication 10, caractérisée en ce qu'une chambre de tranquillisation (43) est prévue dans la paroi de l'outil de moulage (33) avant la cavité du moule (34), l'orifice d'entrée de cette chambre (47) correspondant, en position de couplage de la buse à plusieurs matières, avec l'orifice de sortie (3) de celle-ci et pouvant être fermé au moyen d'un tiroir de fermeture (44) guidé dans la chambre de tranquillisation (43).

FIG. 1

FIG. 2